# EUROPEAN PATENT SPECIFICATION

(11) **EP 1 355 985 B1**
(45) Date of publication and mention of the grant of the patent: **04.08.2004**
(21) Application number: 02710029.6
(22) Date of filing: 25.01.2002
(51) Int. Cl.: C08L 67/00

(54) **A TERNARY MIXTURE OF BIODEGRADABLE POLYESTERS AND PRODUCTS OBTAINED THEREFROM**
TERNÄRE MISCHUNG BIOLOGISCH ABBAUBARER POLYESTER UND DAMIT ERHALTENE PRODUKTE
MELANGE TERNAIRE DE POLYESTERS BIODEGRADABLES ET PRODUITS OBTENUS A L'AIDE DUDIT MELANGE

(30) Priority: 25.01.2001 IT TO20010059
(43) Date of publication of application: 29.10.2003
(73) Proprietor: NOVAMONT S.p.A., 28100 Novara (IT)
(72) Inventor: BASTIOLI, Catia, I-28100 Novara (IT); DEL TREDICI, Gianfranco, I-21018 Sesto Calende (IT); GUANELLA, Italo, I-28068 Romentino (IT); MILIZIA, Tiziana, I-28100 Novara (IT); PONTI, Roberto, I-28047 Oleggio (IT)
(74) Representative: Zanoli, Enrico
(86) International application number: PCT/EP2002/000737
(87) International publication number: WO 2002/059198

(56) References cited:
- EP-A- 0 980 894
- EP-A- 0 990 676
- EP-A- 1 116 746
- US-A- 5 703 160
- US-A- 5 753 724
- US-A- 6 156 929

## Description

The present invention relates to mixtures of biodegradable polyesters comprising at least three polyesters in proportions such that it is possible to obtain biodegradable films with improved characteristics with respect to the individual starting polyesters and, in particular, with significant properties of UV resistance, biaxial strength, that is longitudinally of and transverse the film-forming direction, and transparency, as well as biodegradability.

Films obtained from such mixtures are particularly useful as mulching films, in particular in the case of transparent films, or as layers for multi-layer film for improving the properties of UV resistance of the multi-layer film. Films can also be useful in food packaging or in bags for silage and for various applications.

### Prior Art

Conventional polymers such as low and high density polyethylene are characterised not only by an excellent flexibility and water resistance, but also by good transparency and optimum resistance to tearing. These polymers are used, for example, for sacks and bags, as packaging material and in the form of film for agricultural mulching. However, their low biodegradability has created a visual pollution problem which has been increasing in recent decades.

In the field of transparent film for mulching the need to combine a high strength, a rapid biodegradability and a UV resistance which allows the film to remain on the ground for at least one hundred and twenty days has made it difficult to identify biodegradable materials suitable for this purpose.

Polymers such as L-polylactic acid, D, L-polylactic acid, D-polylactic acid and their copolymers are biodegradable thermoplastic materials, obtained from a renewable source, which are transparent and have excellent resistance to fungi and are therefore suitable for packaging food as well as for the preservation of its organoleptic characteristics. The said materials, however, biodegrade slowly in the ground and even in compost degrade quickly only at high temperatures. The major limitation, however, is in the lack of tear resistance of thin films obtained in normal blown or cast head film-forming conditions. Moreover, their high rigidity makes them unsuitable as films for mulching, bags for food, refuse sacks and other films for packaging, which require high characteristics of strength. Their UV resistance on the other hand is excellent.

If polyesters constituted predominantly of monomers from renewable sources starting from diacids and diols, for example polymers of sebacic, brassylic and azelaic acid are considered, these have the enormous limitation of a strong anistropy in terms of tear resistance between the longitudinal and transverse directions and, moreover, are characterised by a very low longitudinal tear resistance. For this reason films prepared from these resins are also inadequate for use as mulching, as refuse sacks etc. Their UV resistance is good, even if lower than the UV resistance of polylactic acid, whilst the rapidity of biodegrading is comparable with that of polylactic acid.

Polyhydroxyacids such as poly-ε-caprolactone and its copolymers or long chain polyhydroxyalkanoates C₄-C20, when in film form, also tend to become orientated in the longitudinal direction exhibiting further limits of filmability. As further limitations they tend to biodegrade quickly, especially in the ground. The UV stability is similar to that of the above-described polymers from diacid-diol.

Binary mixtures of polylactic acid and aliphatic polyesters have been the subject of many patents. In particular, EP-0 980 894 A1 (Mitsui Chemical) describes a significant improvement in tear resistance and balancing of the mechanical properties in film produced by the mixture of polylactic acid and polybutylen succinate in the presence of a plasticiser.

Those described, however, are non-transparent films, with a very modest strength, of the order of 120g in accordance with the JIS P8116 method. The presence of a plasticiser, moreover, places limitations on the use of the film in contact with food and, because of the ageing phenomena, on use in the agricultural mulching sector.

US Patent 5, 883 199 describes binary mixtures of polylactic acid and polyester, with a polylactic acid content between 10 and 90% and the polyester in a continuous or co-continuous phase. Such mixtures, according to the described examples, have very low values of tear resistance.

### Object, characteristic and advantages of the invention

Starting from the problem of finding a biodegradable material able to combine properties of transparency, tear resistance, UV resistance and complete biodegradability, but with a rapidity of biodegrading compatible with applications such as transparent mulching, it has now been surprisingly found that by combining the three different types of polyesters described (polymer of lactic acid, polyester deriving from diacids/diols and polyhydroxy acids such as poly-ε-caprolactone or long chain C₄-C₂₀ polyhydroxyalkanoates) in specific ratios there is a critical range of compositions in which it is possible to obtain a tear strength in the two directions comparable with conventional plastics materials such as polyethylene, a modulus of elasticity with values lying between those of low and high density polyethylene, and a high UV stability greater than that of polyesters from diacids/diols and of poly-ε-caprolactone, and entirely similar to that of polylactic acid and its copolymers even for very low concentrations of polylactic acid. It is moreover found that the ternary mixture of polyesters according to the invention is able to maintain a transparency comparable with that of the individual starting materials even after stretching.

### Description of the invention

The invention relates to a mixture of biodegradable polyesters comprising:
(A) a polyhydroxy acid such as poly-ε-caprolactone and its copolymers or long chain C₄-C₂₀ polyhydroxyalkanoates;
(B) a polyester of the diacid/diol type with a molecular weight M_{w} greater than 40,000 and more preferably greater than 60,000, and a melting point lying between 40° C and 125° C, preferably between 50° C and 95° C, more preferably between 55° C and 90° C;
(C) a polymer of polylactic acid which contains at least 55% of L-lactic or D-lactic acid or their combinations or a polylactic acid block copolymer with amorphous polymeric blocks , with molecular weight M_{w} greater than 30,000;
in which the concentration of A varies with respect to (A + B) in the range between 40 - 70% by weight, and the concentration of C with respect to (A+B+C) lies between 2-30%, preferably between 5 and 25% by weight.

More particularly, in the mixture according to the invention:
(A) The polyhydroxy acid is biodegradable according to the CEN 13432 regulation, has (at T=23°C and a Relative Humidity of 55%) a modulus lying between 100 MPa and 1200 MPa, longitudinal breaking elongation greater than 20, preferably greater than 100% and more preferably greater than 200%, for film produced by blown film formation having a thickness of 25 - 30 µm and tested within 3 days from filming;
(B) The diacid/diol aliphatic polyester has (at T = 23°C and Relative Humidity of 55%) a modulus of elasticity lying between 200 and 900 MPa and breaking elongation greater than 200%, more preferably greater than 300% for film with a thickness of 25-30 µm produced by blown film formation and tested within 3 days from production;
(C) The polymer of the polylactic acid has a modulus of elasticity greater than 400 Mpa, preferably greater than 800 Mpa.

The mixture of biodegradable polyesters according to the invention is obtained by a process which involves working in a twin screw or single screw extruder in temperature conditions lying between 140 and 200 °C, with a single step procedure or even with a separate mixing and subsequent film-forming process.

In the case of a film-forming process separate from the mixing process, the said operation is achieved with the use, for film-forming, of conventional machines for extrusion of polyethylene (low or high density) with a temperature profile in the range between 140 and 200°C and preferably between 185 and 195°C, a blowing ratio normally in the range 1.5 - 5 and a stretching ratio lying between 3 and 100, preferably 3 and 25, and allows film to be obtained with a thickness between 5 and 50µm.

The said films, in the case of thicknesses lying between 25-30µm, have characteristics of tear resistance by the Elmendorf test in the two directions, of between 5 and 100 N/mm, more preferably between 7 and 90 N/mm and still more preferably between 10 and 80 N/mm, with a ratio between the transverse Elmendorf values and the longitudinal values lying between 4.5 and 0.4 and more preferably between 3 and 0.5.

Such films have a modulus of elasticity lying between 200 and 1200 MPa, more preferably between 300 and 1000 MPa, are biodegradable in the ground and in compost.

Such films have characteristics of transparency expressed as transmittance at the entrance port measured on the HAZEGUARD SYSTEM XL-211 in the range between 85 and 95% when filmed at a head temperature lying between 185 and 200°C.

Moreover, the average reduction in the tensile properties after 216 hours of exposure of the film of 25-30µm to a Philips ultraviolet lamp TL20W/12 is less than 30% considered as the average of the reduction in the breakage load, the reduction in the breakage elongation and the reduction in the longitudinal breakage energy (measured according to ASTM D 882-91).

In the mixture phase polymers of type (A) are preferred with MFI (standard ASTM D 1238-89) lying between 1 and 10 dg/min, polymers of type (B) with MFI lying between 1 and 10 dg/min and polymers of type (C) with MFI lying between 2 and 30 dg/min.

The family of polymers of type (A) includes polyesters obtained from hydroxy acids such as ε-caprolactones and mixtures thereof with other monomers, such as hydroxy acids or diacids/diols, or even with pre-polymers to obtain block polymers. They also include polycaprolactones with star structure or branched in any way, chain extended or partially cross linked. Included are also long chain C₄-C₂₀ polyhydroxyalkanoates, such as polyhydroxybutirrates copolymerized with C₅-C₂₀ polyhydroxiacids comonomers, having tensile properties σ>20 MPa, E comprised between 100 and 1200 Mpa and melting point between 50-160°C, preferably 60-145°C, more preferably between 62-125.

The polymer (B) is constituted by dicarboxylic acids and diols and possibly by hydroxy acids. Examples of diacids are oxyalic, malonic, succinic, gluteric, adipic, pimelic, suberic, azelaic, sebacic, brassylic, undecandioic and dodecandioic acids. Azelaic acid, sebacic acid and brassylic acid and their mixtures are particularly preferred.

Specific glycols are ethylene glycol, diethylene glycol, triethylene glycol, polyethylene glycol, 1, 2- and 1,3-propylene glycol, dipropylene glycol, 1,3- butandiol, 1,4-butandiol, 3- methyl-1, 5-pentandiol, 1, 6- hexandiol, 1, 9-nonandiol, 1, 11-undecandiol, 1, 13- tridecandiol, neopentylglycol, polytetramethylene glycol, 1, 4- cyclohexan dimethanol and cyclohexandiol. These compounds can be utilised alone or in mixture.

Typical hydroxy acids include glycolic acid, lactic acid, 3-hydroxy butyric, 4-hydroxy butyric, 3-hydroxy valeric, 4-hydroxy valeric and 6-hydroxy caproic acid, and further include cyclic esters of hydroxycarboxylic acid such as glycolides, dimers of glycolic acid, ε-caprolactone and 6-hydroxycaproic acid. These compounds can be used alone or in mixtures. All the compounds described above are combined in such a way as to form polyesters with the mechanical characteristics of tensile resistance to elongation greater than 200% and preferably greater than 300% and modulus of elasticity lying between 200 and 900 MPa on blown films of at least 25-30 µm thickness and with a melting point between 40 and 125 °C, preferably between 50 and 95 °C and more preferably between 55 and 90 °C. Particularly preferred are polyesters containing more than 50% moles, preferably more than 70% moles with respect to the total acid content, of azelaic acid, sebacic acid and brassylic acid and their mixtures.

The polymers of type (B) also include polyamide polyesters where the polyester part is as described above and the polyamide part can be caprolactame, aliphatic diamine such as hexamethylene diamine or even an amino acid. The polyesters of type (B) can also contain aromatic diacids in quantities less than 5 mole%. Polymers of type (B) also include polycarbonates.

Biodegradable polyesters forming part of the mixture according to the invention can be polymerised by polycondensation or, as in the case of glycolides and lactones, by ring opening, as is known in the literature. Moreover, the polyesters can be polymers branched with the introduction of polyfunctional monomers such as glycerine, epoxydized soya oil, trimethylolol propane and the like or polycarboxylic acids such as butantetracarboxylic acid. Moreover, the polyesters of type (A), (B) or (C) may also have additives such as chain extenders, difunctional, trifunctional or tetrafunctional anhydrides such as maleic anhydride, trimellitic or pyromellitic anhydrides, with epoxy, isocyanate, aliphatic and aromatic groups.

Regrading with isocyanates can take place in the molten state for the purpose of the polymerisation reaction or in the extrusion phase, or in the solid state as described in the Novamont patent WO 99/28367. The three types of polymers (A), (B) and (C) can also have additives such as chain extenders or cross linking agents of the type described above added to them in the mixing phase.

The material obtained from the mixing of the three polymers (A), (B) and (C) has no need of plastisicers which create problems of migration especially for food packaging. However, quantities of plasticisers less than 10% with respect to the polymers (B + C), preferably less than 5% with respect to the total composition, can be added.

various additives such as antioxidants, UV stabilisers such as Lowilite Great Lake or Tinuvin Ciba, heat stabilisers and hydrolysis stabilisers, flame retardants, slow release agents, organic and inorganic fillers such as, for example, natural fibres, anti-static agents, humectants, colorants and lubricants can also be incorporated in the mixture.

In particular, in the production of blown or cast film it is possible to add silica, calcium carbonate, talc, kaolin, kaolinite, zinc oxide, various wollastonites and in general lamellar inorganic substances, whether or not functionalised with organic molecules, capable of delamellating in the mixing phase with the polymer mixture or with one of the individual polymers of the mixture to give nanocomposites with improved anti blocking and barrier properties. The various inorganic substances can be used in mixtures or with individual products. The concentration of the inorganic additives is generally between 0.05 and 70%, preferably between 0.5 and 50%, more preferably between 1 and 30%.

In the case of fibres and natural fillers such as cellulose fibres, sisal, ground nuts, maize husks, rice, or soya chaff and the like the preferred concentrations lie in the range 0.5 to 70%, more preferably from 1-50%. It is also possible to fill these materials with mixed inorganic and vegetable fillers.

The compositions according to the present invention can be advantageously mixed with destructurised or complexed starch or with proteins or lignin.

To improve the film-forming characteristics amides of aliphatic acids such as oleamide, stearamide, erucamide, behenamide, N-oleylpalmitamide, N-stearylerucamide and other amides, salts of fatty acids such as stearates of aluminium, zinc or calcium and the like can be added. The quantities of these additives vary from 0.05 to 7 parts and preferably between 0.1 and 5 parts of the mixture of polymers.

The mixture thus obtained can be transformed into a film by blowing or extrusion with a flat head. The transparent film is strong and perfectly weldable. It can be obtained in thicknesses to 5 µm by blowing or casting. The film can be transformed into sacks, carrier bags, film and bags for packaging food, extensible film and heat-shrink film, film for adhesive tapes, for nappies, for coloured ornamental tapes. Other principle applications are sacks for silage, sacks for fruit and vegetables with good breathbility, sacks for bread and other foods, films for covering trays of meat, cheese and other foods, and pots for yoghurt. The film can also be biorientated.

The film obtained from the compositions according to the present invention can moreover be utilised as components of multi layer films composed of at least one layer of polylactic acid or from other polyesters, de-structured or non-de-structured starch and its blends with synthetic and natural polymers, or as a component of a multi layer with aluminium and other materials or with a vacuum-metalised layer with aluminium, silica and other inorganic materials. The multi layers can be obtained by co-extrusion, lamination or extrusion coating, if one layer is paper, woven or non-woven textile, another layer of biodegradable material or other material which does not melt at the extrusion temperature of the film. The layer constituted by the material of the present invention will have the characteristic of a high resistance to UV even without the introduction of any UV stabiliser. This is a particularly important factor for a biodegradable film which must degrade in the ground without leaving residues.

The mixture of the present invention can be used in the form of at least one layer of a multi layer film in which at least one other layer can comprise an aliphatic-aromatic polyester, in particular polyalkylene terephthalate-adipate or polyalkylene terephthalate-adipate-succinate and the like, preferably with a teraphthalic acid content with respect to the sum of acids less than 60 mole %, or a blend thereof with de-structured starch or with polylactic acid or their combinations. The layer other than the mixture according to the invention can also be constituted by destructured starch suitably plasticised and/or complexed.

The films can be used for agricultural mulching, green-house cladding, packaging for straw and various forages. They can also contain UV stabilisers, they can be in the form of individual films or co-extruded, as in the case of materials based on starch, to give improved UV resistance, improved barrier properties, and slower degradation under atmospheric agents and in the soil. The material obtained can also be utilised to obtain fibres for woven and non-woven textiles or for fishing nets. Moreover, the non-woven fabric can be used in the sector of nappies, sanitary towels etc. The fibres can also be utilised as weldable reinforcing fibres in special papers. The material can be utilised with success also for the production of extruded or co-extruded sheets for thermoforming with other layers of polymers such as polylactic acid, other polyesters or polyamides, materials based on starch and other materials and then thermoformed into trays for food, agricultural containers and others.

The material can have additives such as polymeric additives like waxes, polyethylene and polypropylene, PET and PBT, polystyrene, copolymers of ethylene and propylene with functional carboxylic, carboxylate, methacrylate, acrylate groups, or hydroxylic groups, or combined with these polymers in coextrusion, coinjection or the like. The material can be utilised as a matrix in a blend with de-structured starch according to the processes described in EP-0 327 505, EP-539 541, EP-0 400 532, EP-0 413 798, EP-0 965 615 with the possibility of forming complexes with starch.

They can be utilised as coating films for biodegradable foam materials based on polyesters, polyamides, thermoplastic starches, complex starches or simply blends of starch with other polymers or with the material of the present invention.

The material, on its own or in mixture with starch or other polymers, can be obtained as a foam material to produce containers for fruit and vegetables, meat, cheese and other food products, containers for fast food or in the form of expanded agglomerable beads for expanded moulded work pieces for industrial packaging. They can be used as foam materials in place of expanded polyethylene. They can also find applications in the non-woven and woven textile fibre sector for clothing, sanitary products and industrial applications, as well as in the sector of fishing nets or nets for fruit and vegetables. The compositions according to the present invention can be advantageously used also in the injection molding field for example in ordr to produce cutlery, food containers, and so on.

The mixture of biodegradable polyesters according to the invention will now be illustrated by means of several non-limitative examples.

### Examples

### Example 1

Polymers constituting the mixture:
- 50% poly-ε-caprolactone (A): Union Carbide Tone 787;
- 40% aliphatic polyester (B): polybutylene sebacate produced from sebacic acid and butandiol with monobutylstannoic acid catalyst according to example 1 of WO 00/55236:
- 10% polymer of polylactic acid (C): 4040 Cargill with a 6% content of D-lactic (MFI = 4 dg/min).
   Mixing of polymers in OMC extruder:
   58 mm diameter; L/D = 36; rpm = 160; temperature profile 60-120-160 x 5 - 155 x 2
   Consumption = 80A, flow rate = 40 Kg/h
   Filmformation on a Ghioldi machine;
   Diameter = 40 mm, L/D = 30, rpm = 45; die: diameter = 100mm; air gap = 0.9mm; land = 12; flow rate = 13.5 Kg/h; temperature profile: 110-130-145 x 2; temperature filter = 190 x 2; head temperature = 190 x 2.

Film: width = 400 mm; thickness = 25 µm.
Determination of the values of transmittance effected at the entrance port (Tₑₙₜᵣ) was made by means of the HAZEGUARD SYSTEM XL - 211 measuring instrument.

The values of the modulus of elasticity (E), breaking load (σ) , breaking elongation (ε) and breaking energy (En_{break}) were determined in accordance with ASTM D 882 - 91 by means of an INSTRON 4502 instrument.

The tensile properties were repeated at different exposure times to a Philips TL20W/12 UV lamp. In particular, samples in accordance with ASTM D 882-91 were fixed to a disc rotating at a speed of 40 revolutions per minute positioned at a distance of 12 cm from the UV lamp.

The results of the test were plotted in table 1. Examples 3a - c and 4a - b are comparison examples.

In example 5 polymer (A) is polyhydroxybutyrate-valerate (Biopol) a copolymer of hydroxybutyric acid with 16% of hydroxyvaleric acid.

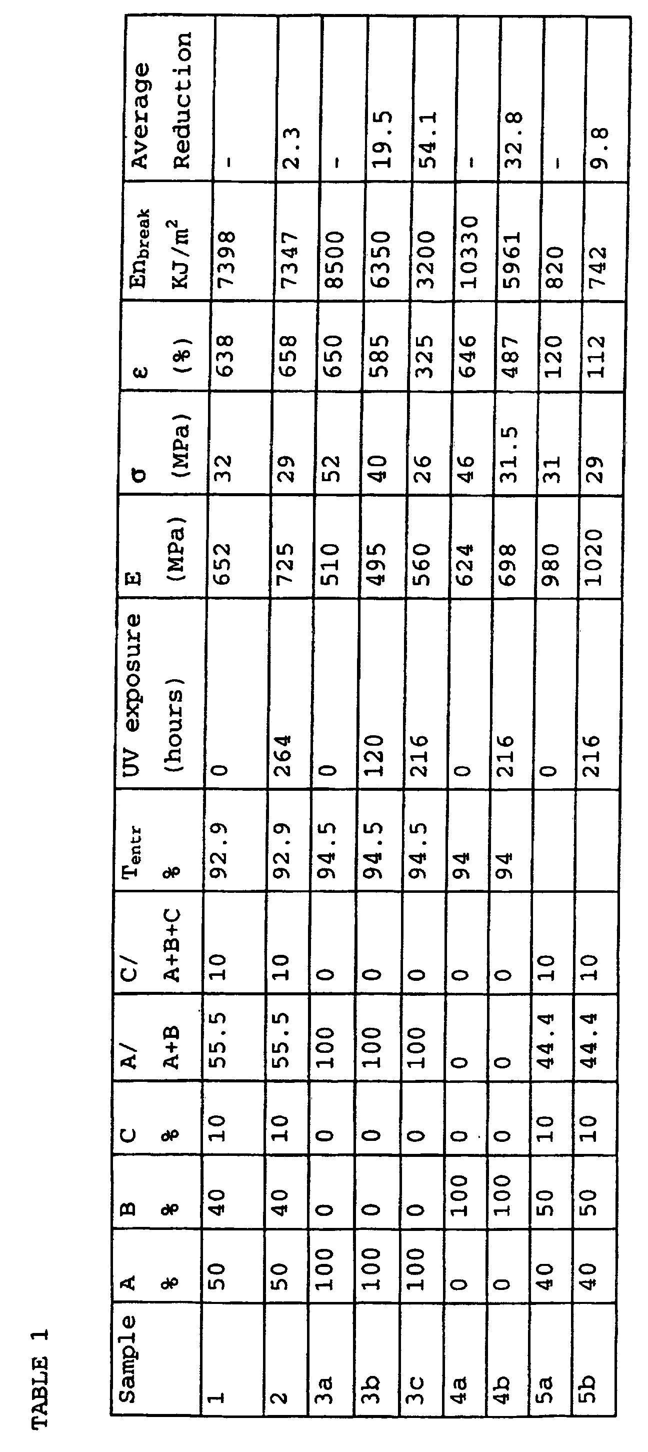

## Claims

1. A biodegradable mixture of polyesters comprising:
(A) a polyhydroxy acid such as poly-ε-caprolactone and its copolymers or long chain polyhydroxyalkanoates C₄-C₂₀.
(B) a polyester of the diacid diol type with a molecular weight Mₐ greater than 40,000 and a melting point lying between 40 and and 125°C;
(C) a polymer of polylactic acid which contains at least 55% L-lactic or D-lactic acid or their combinations with a molecular weight M_{w} greater than 30,000 in which the concentration of (A) varies with respect to (A + B) in the range of between 40 and 70% by weight, and the concentration of C with respect to (A + B + C) lies between 2 and 30, preferably between 5 and 25% by weight and with a UV stability measured on film of 25-30µm which has an average reduction in its tensile properties after 216 hours of exposure to UV rays less than 30% considered as the average reduction in breaking load, elongation at breakage and longitudinal breaking energy.

2. A biodegradable mixture of polyesters according to the preceding claim, in which the aliphatic polyester (B) has a modulus of elasticity lying between 200 and 900 MPa and a breaking elongation greater than 200%, more preferably greater than 300% for film with a thickness of 25-30µm produced by blown file formation.

3. A biodegradable mixture of polyesters according to either of the preceding claims in which the polymer of polylactic acid (C) has a modulus of elasticity greater than 400 preferably greater than 800 MPa.

4. A biodegradable mixture of polyesters according to any preceding claim, in which the aliphatic polyester (B) has a melting point lying between 50 and 95°C, preferably between 55 and 90 °C.

5. A biodegradable mixture of polyesters according to any preceding claim in which the diacid content of the aliphatic polyester (B). in azelaic acid, sebacic acid, brassylic acid, or mixtures of these in concentrations, with respect to the total acid, greater than 50mole% and preferably greater than 70 mole%.

6. A biodegradable mixture of polyesters according to any preceding claim, combined with de-structured starch, raw starch or modified starch in which the starch is in dispersed phase, complexed or not complexed.

7. A film produced by mixtures'of biodegradable polymers according to any preceding claim.

8. A film according to claim 7 **characterised by** a bidirectional tear resistance with the Elmendorf test lying between 5 and 100 N/mm, preferably 7 and 90 N/mm and more preferably between 10 and 80 N/mm.

9. A film according to claim 8 **characterised in that** the ratio between the tear resistance values according to the Elmendorf test in the transverse and longitudinal directions lies between 4.5 and 0.4.

10. A film according to claims 7 to 9, **characterised in that** the value of the modulus of elasticity lies between 200 and 1200 MPa, more preferably between 300 and 1000 MPa.

11. A multi layer film constituted by one or more layers of material according to any of claims from 7 to 10, and at least one layer of material comprising aliphatic/aromatic polyester as such or in a blend with other polyesters and/or with de-structured starch.

12. A multi layer film according to claim 11, in which the aliphatic/aromatic polyester is polybutylene terephthalate-adipate with a ratio between teraphthalic and adipic acid less than 65 mole%, in a blend with de-structured starch and possibly polylactic acid.

13. Use of film according to any of claims 7 to 12 as a transparent agricultural mulch, as a green-house cover or for packaging straw and forage.

14. Use of film according to any of claims 7 to 12 for packaging food or for containing organic residues.

15. A solid sheet produced from mixtures according to claims 1to 6 for food containers, pots for fish breeders, or industrial containers in general.

16. An expanded sheet produced from mixtures according to claims 1 to 6 for food or other containers and for industrial packaging.

17. Fibres produced from mixtures according to claims 1 to 6 for woven or non-woven textiles for use in industrial, clothing and sanitary sectors.

18. A coating material produced from mixtures according to claims 1to 6 for application to paper, woven or non-woven fabric, or other layers of solid or expanded biodegradable material.

## Patentansprüche

1. Eine biologisch abbaubare Mischung aus Polyestern, umfassend:
(A) eine Polyhydroxysäure wie Poly-ε-caprolacton und deren Copolymere oder langkettige Polyhydroxyalkanoate C₄₋₂₀;
(B) einen Polyester des Disäure-Diol-Typs mit einem Molekulargewicht Mw größer als 40 000 und einem Schmelzpunkt, der zwischen 40 und 125°C liegt.
(C) ein Polymer der Polymilchsäure, das mindestens 55 % L-Milch- oder D-Milchsäure oder ihre Kombinationen enthält, mit einem Molekulargewicht Mw größer als 30 000, bei dem die Konzentration von (A) bezüglich (A + B) in dem Bereich zwischen 40 und 70 Gew.-% variiert und die Konzentration von C bezüglich (A + B + C) zwischen 2 und 30 liegt, vorzugsweise zwischen 5 und 25 Gew.-% und mit einer UV-Stabilität, gemessen an der Folie von 25-30 µm, die eine durchschnittliche Reduktion ihrer Zugeigenschaften nach 216 Stunden Exposition gegenüber UV-Strahlen unter 30 % aufweist, was als die durchschnittliche Reduktion bei der Bruchbelastung, Reißdehnung und longitudinalen Bruchenergie betrachtet wird.

2. Eine biologisch abbaubare Mischung aus Polyestern gemäß dem vorhergehenden Anspruch, bei dem der aliphatische Polyester (B) ein Elastizitätsmodul, das zwischen 200 und 900 MPa liegt und eine Bruchdehnung, die größer ist als 200 %, mehr vorzuziehen größer als 300 % für eine Folie mit einer Dicke von 25-30 µm, hergestellt durch Blasfolienbildung, aufweist.

3. Eine biologisch abbaubare Mischung aus Polyestern gemäß einem der vorhergehenden Ansprüche, bei der das Polymer der Polymilchsäure (C) ein Elastizitätsmodul über 400, vorzugsweise über 800 MPa aufweist.

4. Eine biologisch abbaubare Mischung aus Polyestern gemäß einem der vorangehenden Ansprüche, bei der der aliphatische Polyester (B) einen Schmelzpunkt, der zwischen 50 und 95°C, vorzugsweise zwischen 55 und 90°C liegt, aufweist.

5. Eine biologisch abbaubare Mischung aus Polyestern gemäß einem der vorangehenden Ansprüche, bei der der Disäure-Gehalt des aliphatischen Polyesters (B) an Azelainsäure, Sebacinsäure, Brassylsäure oder Mischungen von diesen in Konzentrationen bezüglich der Gesamtsäure über 50 mol-% und vorzugsweise über 70 mol-% vorliegt.

6. Eine biologisch abbaubare Mischung aus Polyestern gemäß einem der vorangehenden Ansprüche, kombiniert mit destrukturierter Stärke, roher Stärke oder modifizierter Stärke, bei der die Stärke in dispergierter Phase komplexiert oder nicht-komplexiert vorliegt.

7. Eine Folie, hergestellt durch Mischung biologisch abbaubarer Polymere gemäß einem der vorangehenden Ansprüche.

8. Eine Folie gemäß Anspruch 7, **gekennzeichnet durch** eine bidirektionale Reißfestigkeit bei dem Elmendorf-Test, die zwischen 5 und 100 N/mm, vorzugsweise 7 und 90 N/mm und mehr vorzuziehen zwischen 10 und 80 N/mm liegt.

9. Eine Folie gemäß Anspruch 8, **dadurch gekennzeichnet, daß** das Verhältnis zwischen den Reißfestigkeitswerten gemäß dem Elmendorf-Test in den transversalen und longidudinalen Richtungen zwischen 4,5 und 0,4 liegt.

10. Eine Folie gemäß den Ansprücheen 7 bis 9, **gekennzeichnet dadurch, daß** der Wert des Elastizitätsmoduls zwischen 200 und 1200 MPa liegt, mehr vorzuziehen zwischen 300 und 1000 MPa.

11. Eine vielschichtige Folie, bestehend aus einer oder mehr Materialschichten gemäß einem der Ansprüche 7 bis 10 und mindestens einer Materialschicht, umfassend aliphatischen/aromatischen Polyester als solchen oder in einer Mischung mit anderen Polyestern und/oder mit destrukturierter Stärke.

12. Eine vielschichtige Folie gemäß Anspruch 11, bei der aliphatische/aromatische Polyester Polybutylenterephthalatadipat mit einem Verhältnis zwischen Terephthalsäure und Adipinsäure unter 65 mol-% ist in einer Mischung mit destrukturierter Stärke und möglicherweise Polymilchsäure.

13. Verwendung der Folie gemäß einem der Ansprüche 7 bis 12 als eine transparente landwirtschaftliche Bodendecke, als Gewächshausabdeckung oder zur Verpackung von Stroh und Futter.

14. Verwendung der Folie gemäß einem der Ansprüche 7 bis 12 zur Verpackung von Nahrungsmitteln oder zur Aufbewahrung organischer Reste.

15. Ein festes Blatt, hergestellt aus Mischungen gemäß den Ansprüchen 1 bis 6 für Nahrungsmittelbehälter, Töpfe für Fischzüchter oder industrielle Behälter im allgemeinen.

16. Ein expandiertes Blatt, hergestellt aus Mischungen gemäß den Ansprüchen 1 bis 6 für Nahrungsmittel oder andere Behälter und für industrielle Verpackungen.

17. Fasern, hergestellt aus Mischungen gemäß den Ansprüchen 1 bis 6, für gewebte oder nicht-gewebte Textilien zur Verwendung in industriellen, Kleidungs- und Hygienebereichen.

18. Beschichtungsmaterial, hergestellt aus Mischungen gemäß den Ansprüchen 1 bis 6, zur Aufbringung auf Papier, gewebte oder nicht-gewebte Stoffe oder andere Schichten aus festen oder expandiertem biologisch abbaubaren Material.

## Revendications

1. Un mélange biodégradable de polyesters comprenant :
un polyhydroxy acide tel que la poly-ε-caprolactone et ses copolymères ou des polyhydroxyalcanoates en C₄ à C₂₀ à longue chaîne ;
un polyester du type diacide/diol ayant une masse moléculaire M_{w} supérieure à 40 000 et un point de fusion se situant entre 40 et 125 °C ;
un polymère d'acide polylactique contenant au moins 55 % d'acide L-lactique ou D-lactique ou leurs combinaisons, ayant une masse moléculaire M_{w} supérieure à 30 000 ; dans lequel la concentration de (A) varie, par rapport à (A + B), dans la gamme allant de 40 à 70 % en poids, et la concentration de C, par rapport à (A + B + C), se situe entre 2 et 30 %, de préférence entre 5 et 25 % en poids et avec une stabilité aux UV mesurée sur un film de 25 à 30 µm qui a une diminution moyenne de ses propriétés de traction après 216 heures d'exposition aux rayons UV inférieure à 30 % considérée comme la diminution moyenne, de la charge à la rupture, de l'allongement à la rupture et de l'énergie de rupture longitudinale.

2. Un mélange biodégradable de polyesters selon la revendication précédente, dans lequel le polyester aliphatique (B) a un module d'élasticité se situant entre 200 et 900 MPa et un allongement à la rupture supérieur à 200 %, de préférence supérieur à 300 % pour un film ayant une épaisseur de 25 à 30 µm produit par formation de film par soufflage.

3. Un mélange biodégradable de polyesters selon l'une ou l'autre des revendications précédentes, dans lequel le polymère de l'acide polylactique (C) a un module d'élasticité supérieur à 400, de préférence supérieur à 800 MPa.

4. Un mélange biodégradable de polyesters selon l'une quelconque des revendications précédentes, dans lequel le polyester aliphatique (B) a un point de fusion se situant entre 50 et 95 °C, de préférence entre 55 et 90 °C.

5. Un mélange biodégradable de polyesters selon l'une quelconque des revendications précédentes, dans lequel la teneur en diacide du polyester aliphatique (B) dans l'acide azélaïque, l'acide sébacique, l'acide brassylique ou des mélanges de ceux-ci dans des concentrations, par rapport à la totalité des acides, supérieure à 50 % en moles et de préférence supérieure à 70 % en moles.

6. Un mélange biodégradable de polyesters selon l'une quelconque des revendications précédentes, combiné à de l'amidon déstructuré, de l'amidon brut ou de l'amidon modifié, dans lequel l'amidon est en phase dispersée, complexé ou non complexé.

7. Un film produit par des mélanges de polymères biodégradables selon l'une quelconque des revendications précédentes.

8. Un film selon la revendication 7, **caractérisé par** une résistance au déchirement bidirectionnel suivant le test d'Elmendorf se situant entre 5 et 100 N/mm, de préférence entre 7 et 90 N/mm et plus préférablement entre 10 et 80 N/mm.

9. Un film selon la revendication 8, **caractérisé en ce que** le rapport entre les valeurs de résistance au déchirement, suivant le test d'Elmendorf dans les directions transversale et longitudinale, se situe entre 4,5 et 0,4.

10. Un film selon les revendications 7 à 9, **caractérisé en ce que** la valeur du module d'élasticité se situe entre 200 et 1200 MPa, plus préférablement entre 300 et 1000 MPa.

11. Un film multicouche constitué d'une ou plusieurs couches du matériau selon l'une quelconque des revendications 7 à 10, et au moins une couche de matériau comprenant un polyester aliphatique/aromatique en tant que tel ou en mélange avec d'autres polyesters et/ou de l'amidon déstructuré.

12. Un film multicouche selon la revendication 11, dans lequel le polyester aliphatique/aromatique est le polybutylène téréphtalate-adipate, avec un rapport entre l'acide téréphtalique et l'acide adipique inférieur à 65 % en moles, en mélange avec de l'amidon déstructuré et éventuellement de l'acide polylactique.

13. Utilisation d'un film selon l'une quelconque des revendications 7 à 12, comme paillage agricole transparent, comme couverture de serre ou pour emballer de la paille et du fourrage.

14. Utilisation d'un film selon l'une quelconque des revendications 7 à 12, pour emballer des aliments ou pour contenir des résidus organiques.

15. Une feuille solide produite à partir de mélanges selon les revendications 1 à 6, destinée à des récipients pour aliments, des pots pour des éleveurs de poissons ou des conteneurs industriels en général.

16. Une feuille expansée produite à partir de mélanges selon les revendications 1 à 6, destinée à des récipients pour aliments ou d'autres récipients et pour l'emballage industriel.

17. Fibres produites à partir de mélanges selon les revendications 1 à 6, pour des textiles tissés ou non-tissés destinés aux domaines industriel, de l'habillement et de la santé.

18. Un matériau de revêtement produit à partir de mélanges selon les revendications 1 à 6, destiné à une application sur du papier, une étoffe tissée ou non-tissée, ou d'autres couches de matériau biodégradable massif ou expansé.
